# EUROPEAN PATENT APPLICATION

(11) **EP 4 261 115 A1**
(43) Date of publication of application: **18.10.2023**
(21) Application number: 23168006.7
(22) Date of filing: 14.04.2023
(51) Int. Cl.: B62H 1/04, B62K 7/04

(54) **KICKSTAND ESPECIALLY FOR CARGO BIKES AND THE LIKE**

(30) Priority: 15.04.2022 IT 202200007610
(71) Applicant: Ursus S.P.A., 36027 Rosa' VI (IT)
(72) Inventor: FERRONATO, Sergio, 36027 ROSA' (VI) (IT)
(74) Representative: Marchioro, Paolo

(57) **Abstract**

The present invention relates to a kickstand (10) particularly for cargo bikes and the like, comprising:
- a fixed bracket (11) to be attached to a bicycle frame;
- a support assembly (12) configured to assume a raised resting arrangement, adjacent to said bicycle frame, and a lowered working arrangement, with a ground support portion (13) positioned in contact with the ground;
- reversible locking means (15) configured to stabilise the position of the support assembly (12) in a lowered working arrangement.

The reversible locking means (15) comprise:
- a coupling lever (17), pivoted to the fixed bracket (11);
- a coupling seat (21), defined on the support assembly (12), positioned and configured in such a way that it is at least partly occupied by a coupling portion (20) of the coupling lever (17) when the support assembly (12) is in a lowered working arrangement and the coupling lever assumes a coupling arrangement;
- elastic coupling means (22) acting on the coupling lever (17) in such a way that the coupling portion (20) is at least partly engaged in the coupling seat (21) when the support assembly (12) is in the lowered working arrangement;
- reversible disengagement means (23) configured to lock the coupling lever (17) in a locked disengagement arrangement of the coupling portion (20) from the coupling seat (21) when said support assembly (12) is in said lowered working arrangement;
- recovery means (24) configured to release the coupling lever (17) from the locked disengagement arrangement and to allow the coupling lever (17) to assume either the coupling arrangement or a free disengagement arrangement in which the coupling portion (20) is outside the coupling seat (21).

## Description

The invention relates to a kickstand particularly for cargo bikes.

Transport bicycles, also known as cargo bikes, are nowadays known and increasingly common in the cycling field, which are bikes or cycles designed and built specifically for the transport of people, animals and goods.

The main types of such transport bikes are:
- 'Long John', in which a loading platform is located between the pedals and the front wheel;
- 'Long Tail', in which the load is positioned above the rear wheel;
- tricycles, in which the body is attached to the two front or rear wheels.

Cargo bikes thus differ from normal bikes in their carrying capacity. They are often capable of carrying 200 kg and more, while a normal bike carries around 100 kg. To be able to move this mass safely, cargo bikes have heavy, reinforced frames. A cargo bike can weigh as much as 27 kg in the version without a motor and even 45 kg with the motor. These weights are added to the carried load, reaching up to 250 - 300 kg of moving mass.

While most bicycles are usually equipped with a side stand, cargo bikes typically include a central kickstand, which provides a more stable and sturdy parking position.

Such a central kickstand typically comprises two ground support rods, or a U-shaped bracket, which kickstand allows the front or rear wheel to be lifted off the ground when it is in a lowered working arrangement.

In fact, these cargo bikes need to be supported when not in use by kickstands with two support rods, which allow for double support at the same time and the maintenance of the cargo bike's centre of gravity on a vertical plane that is also substantially symmetrical for the bike itself.

Such two-rod kickstands of the known type are generally defined by a single metal bar substantially bent in a U or V shape, with the central section of which the rotation pin and reversible locking means of the kickstand are associated in a first, lowered support arrangement, or in a second, raised travelling arrangement.

Since cargo bikes are on the whole very heavy, especially when more or less loaded, lowering the kickstand is also onerous in terms of effort and fatigue on the part of a user.

In fact, it is well known that in order to position a two-rod kickstand in a lowered operating arrangement, it is first necessary to rotate the kickstand downwards with one foot, then, when the lower ends of the kickstand are resting on the ground, it is necessary to pull forcefully on the frame of the bike so that the rods of the kickstand rotate with respect to the frame until they pass a point of unstable equilibrium in which the support rods are perpendicular to the ground, and so that these support rods are arranged in a stable arrangement in which their rotation is prevented in one direction by the end-stroke elements and in the opposite direction by the force-weight of the cargo bike itself.

These operations are imposed by the fact that these kickstands have support rods whose length in the vertical direction is greater than the distance of their axis of rotation from the ground.

In order to avoid the user of a cargo bike having to repeatedly perform such tiring operations on the same day every time he/she has to park the cargo bike, two-rod kickstands are now known whose support rods have a length in the vertical direction that is essentially equal to the distance of their axis of rotation from the ground.

Such support rods of reduced length when lowered must be maintained in the lowered working arrangement by reversible locking means, which in turn must comprise quick release means to allow the support rods to rotate upwards in the raised resting and travelling arrangement.

Such quick release means generally involve the use of a Bowden cable, by which a fixed flexible sheath guides therein a metal traction cable from a release lever on the handlebar of the cargo bike to a coupling system associated with the kickstand.

Although well known and appreciated, these quick-release means have the disadvantage that they require the fitting of a Bowden cable, which creates annoying bulk due to the sheath that is positioned between the handlebar and the kickstand, and which must be kept as close as possible to the frame with special fastening systems.

Moreover, this release lever is added to the brake and gear levers on the handlebar, resulting in additional bulk that must be carefully managed by the user.

Another drawback of adopting Bowden cable release means is the fact that such a Bowden cable results in an additional cost for a buyer, both in terms of components and in terms of assembly time.

The task of the present invention is to develop a kickstand particularly for cargo bikes capable of obviating the aforementioned drawbacks and limitations of the prior art.

In particular, an object of the invention is to develop a kickstand whose control system is less cumbersome and inconvenient than the release means of similar known kickstands.

Another object of the invention is to develop a kickstand that is faster to fit on a bicycle than kickstands with Bowden cable release means of the known type. A further aim of the invention is to develop a kickstand especially for cargo bikes that is easy and intuitive to manoeuvre.

The above-mentioned task and objects are achieved by a kickstand particularly for cargo bikes according to claim 1.

Further characteristics of the kickstand according to claim 1 are described in the dependent claims.

The aforesaid task and objects, together with the advantages that will be mentioned hereinafter, are indicated by the description of an embodiment of the invention, which is given by way of non-limiting example with reference to the attached drawings, where:
- Figure 1 represents a perspective view of a kickstand according to the invention, in a first use arrangement;
- Figure 2 represents a side view of the kickstand of Figure 1;
- Figure 3 represents a sectional view according to the line of section III-III of Figure 2;
- Figure 4 represents a perspective view of the kickstand according to the invention in a second use arrangement;
- Figure 5 represents a perspective view of a detail of the kickstand according to the invention;
- Figure 6 represents a side view of the kickstand in the second use arrangement of Figure 4;
- Figure 7 represents a detail in a sectional view according to the line of section VII-VII of Figure 6;
- Figure 8 represents a perspective view of a kickstand according to the invention in a third use arrangement;
- Figure 9 represents a side view of the kickstand in the third use
arrangement of Figure 8;
- Figure 10 represents a detail in a sectional view according to the line of section X-X of Figure 9;
- Figure 11 represents a schematic side view of a cargo bike comprising a kickstand according to the invention.

With reference to the above-mentioned figures, a two-rod kickstand particularly for cargo bikes and the like according to the invention is indicated as a whole by number **10.**

Such a kickstand **10** comprises:
- a fixed bracket **11** configured to be attached to a frame of a bicycle;
- a support assembly **12** comprising at least one ground support portion **13;** the support assembly **12** is pivoted with hinging means **14** to the fixed bracket **11,** and is configured to assume a raised resting arrangement, adjacent to the frame of the bicycle, and a lowered working arrangement, with the at least one ground support portion **13** positioned in contact with the ground;
- reversible locking means **15** configured to stabilise the position of said support assembly **12** with respect to the fixed bracket **11** in the lowered working arrangement;
- automatic lifting means **16** configured to allow the automatic rotation of the support assembly **12** from the lowered working arrangement to the raised resting arrangement.

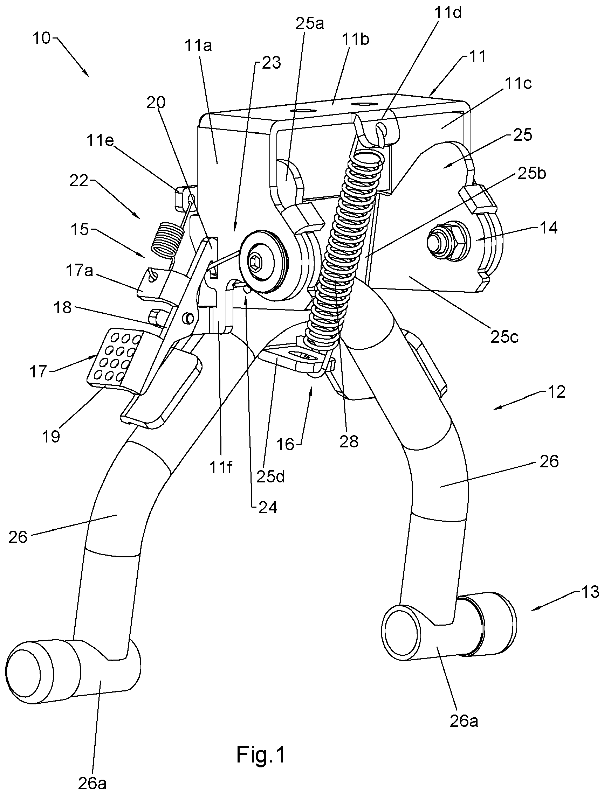

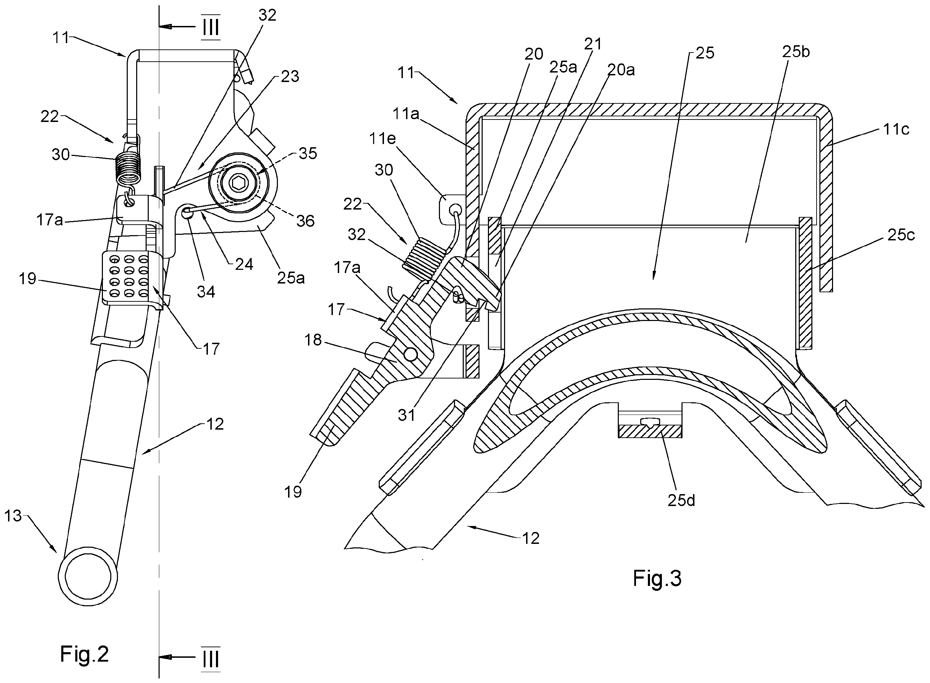

The peculiarity of the kickstand **10** according to the invention lies in the fact that the reversible locking means **15** comprise:
- a coupling lever **17,** which coupling lever **17** comprises in turn a central area **18,** a manoeuvring portion **19** and an opposite coupling portion **20;** the central area **18** is pivoted to said fixed bracket **11;**
- a coupling seat **21** defined on the support assembly **12,** which coupling seat **21** is positioned and configured so as to be at least partly occupied by the coupling portion **20** of said coupling lever **17** when the support assembly **12** is in said lowered working arrangement and said coupling lever assumes a coupling arrangement; said coupling arrangement and the coupling seat **21** are clearly visible in the section of figure 3;
- elastic coupling means **22** configured to act on the coupling lever **17** so that the coupling portion **20** is at least partly engaged in the coupling seat **21** in the coupling arrangement when the support assembly **12** is in the lowered working arrangement, as clearly shown in Figures 1, 2 and 3;
- reversible disengagement means **23** configured to lock the coupling lever **17** in a locked disengagement arrangement of the coupling portion **20** from the coupling seat **21** when the support assembly **12** is in the lowered working arrangement;
- recovery means **24** configured to release the coupling lever **17** from the locked disengagement arrangement and to permit the coupling lever **17** to assume either the coupling arrangement or a free disengagement arrangement in which said coupling portion **20** is outside said coupling seat **21.**

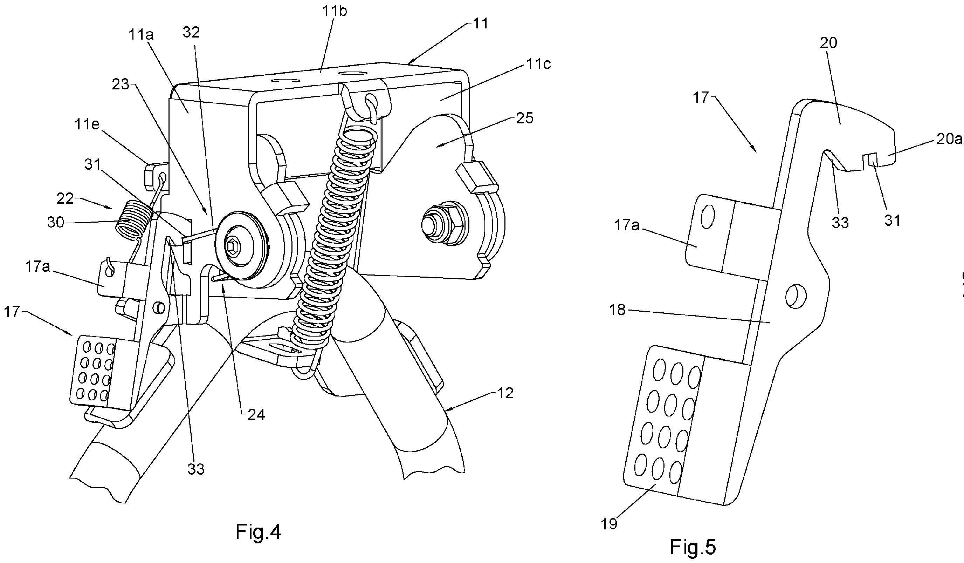

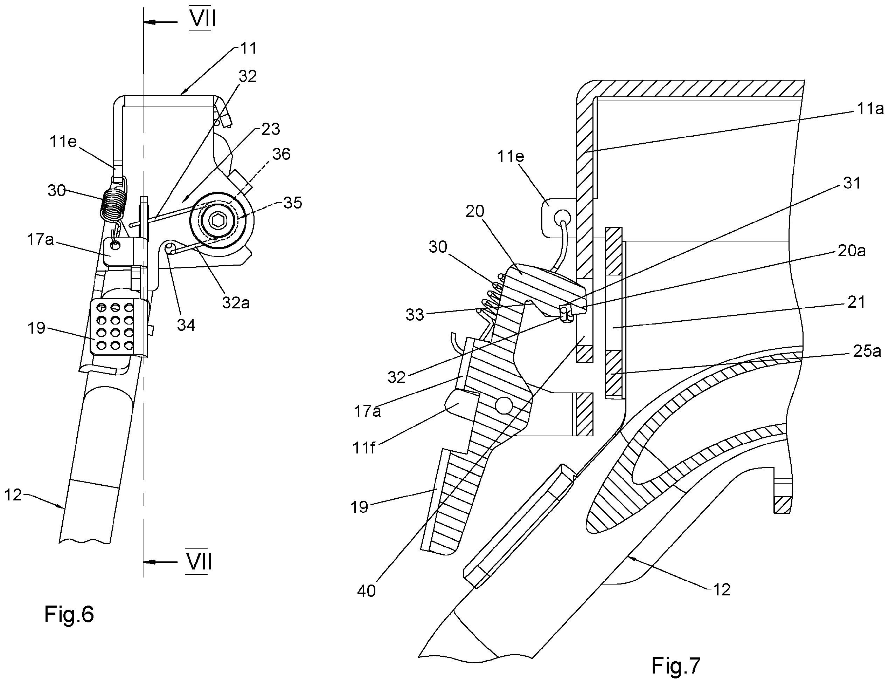

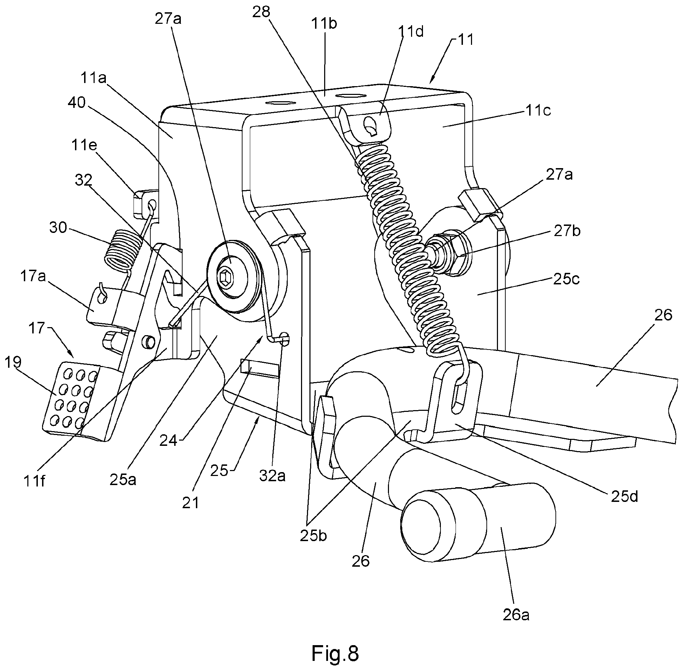

Thus, the coupling lever **17** is configured to take on alternately:
- a coupling arrangement, in which the coupling portion **20** of the coupling lever **17** is at least partly engaged into the coupling seat **21,** as shown in Figures 1, 2 and 3;
- a locked disengagement arrangement, in which the coupling lever **17** is in a position such that the coupling portion **20** is completely outside the coupling seat **21,** and the coupling lever itself **17** is locked in this arrangement by the reversible disengagement means **23;** the reversible disengagement means **23** prevent the coupling lever **17** from rotating as a result of the action of the elastic coupling means **22;** this arrangement is shown in Figures 4, 6 and 7;
- a free disengagement arrangement, in which the coupling lever **17** is in a position such that the coupling portion **20** is completely outside the coupling seat **21,** and the coupling lever itself **17** is free from the action of the reversible disengagement means **23;** the reversible disengagement means **23** do not act on the coupling lever **17** as a result of the action of the recovery means **24,** and the coupling lever **17** is free to rotate as a result of the action of the elastic coupling means **22;** for example, the coupling portion **20** is resting against a portion of the support assembly **12;** this arrangement is shown in Figures 8, 9 and 10.

In particular, the coupling portion **20** comprises an end portion **20a** which is positioned in the coupling seat **21** when the support assembly **12** is in said lowered working arrangement and said coupling lever **17** assumes the coupling arrangement, and rests against a first side wall **11a** of the fixed bracket **11** when the coupling lever **17** assumes the free disengagement arrangement.

In particular, in the embodiment of the invention described herein by way of non-limiting example of the invention itself, the fixed bracket **11** is defined by a C-shaped body.

The fixed bracket **11** thus comprises a first central part **11b** for attachment to a bike frame, and two opposing first side walls **11a** and **11c.**

The side walls **11a** and **11c** extend from the central part **11b.**

The central part **11b** and the opposing side walls **11a** and **11c** define a central compartment into which the support assembly **12** is hinged.

In the present non-limiting embodiment of the invention, the support assembly **12** comprises:
- a swivelling bracket **25,** pivoted with the hinging means **14** to the fixed bracket **11;**
- the ground support portion **13,** attached to the swivelling bracket **25.**

In particular, in the present embodiment, the ground support portion **13** comprises two symmetrical legs **26,** defining between them a substantially inverted 'V' or inverted 'U' shape.

At the free end of each leg **26** there is a support foot **26a.**

The swivelling bracket **25** comprises a second central part **25b** and two opposing second side walls **25a** and **25c,** wherein said second side walls **25a** and **25c** are pivoted with the hinging means **14** to the facing first side walls **11a** and **11c** of the fixed bracket **11.**

The second side walls **25a** and **25c** extend from the second central part **25b.** The hinging means **14** comprise, for example, two opposing coaxial pins; each coaxial pin comprises a screw portion **27a** and a clamping nut **27b.**

The automatic lifting means **16,** configured to allow automatic rotation of the support assembly **12** from the lowered working arrangement to the raised resting arrangement, comprise a tension spring **28** coupled at a first end to a first central coupling portion **11d** of the fixed bracket **11** and at a second end to a second central coupling portion **25d** of the swivelling bracket **25.**

The coupling seat **21** is defined on a second side wall **25a** of the swivelling bracket **25.**

The coupling seat **21** is positioned and configured to be at least partly occupied by the coupling portion **20** of said coupling lever **17** when the support assembly **12** is in said lowered working arrangement and said coupling lever **17** assumes a coupling arrangement.

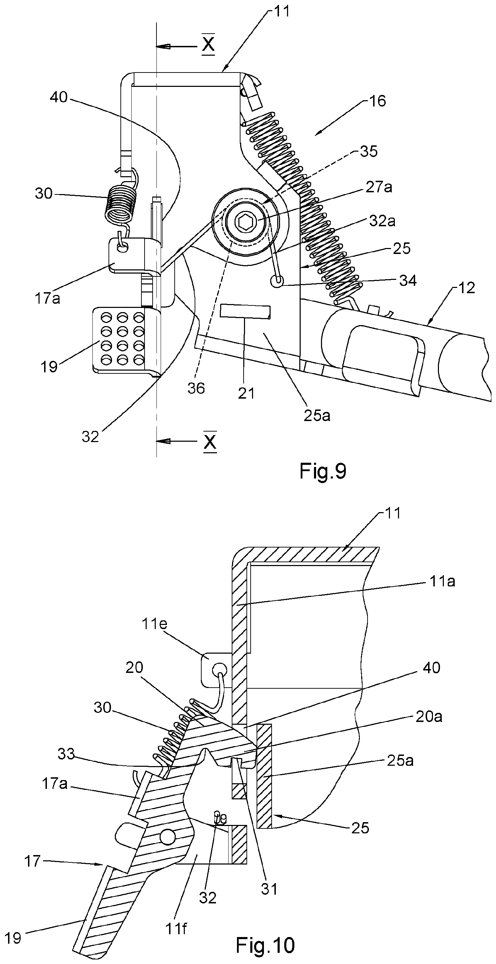

Thus, in the free disengagement arrangement, the coupling portion **20** of the coupling lever **17** is resting against a second side wall **25a** of the swivelling bracket **25,** as clearly visible in Figure 10.

The elastic coupling means **22** comprise a tension spring **30** coupled with a first end to a coupling side portion **11e** of the fixed bracket **11,** and with the second end to a coupling tab **17a** extending from the central area **18** of the coupling lever **17.**

The reversible disengagement means **23,** configured to lock the coupling lever **17** in a locked disengagement arrangement of the coupling portion **20** from the coupling seat **21** when the support assembly **12** is in the lowered working arrangement, comprise:
- a locking recess **31** defined on the coupling portion **20** of the coupling lever **17** near the end portion **20a;**
- a locking insert **32,** configured to engage in the locking recess **31** when the support assembly **12** is in the lowered working arrangement and simultaneously the coupling lever **17** is rotated according to a rotation and release direction that causes the coupling portion **20** to exit from the coupling seat **21.**

The coupling lever **17** is rotated in the release direction by the action of a user's foot on the manoeuvring portion **19** of the coupling lever **17** itself.

The coupling lever **17** is pivotally constrained to a side pivoting portion **11f** of the fixed bracket **11.**

In particular, the coupling lever **17** is pivotally constrained to the side pivoting portion **11f** at its own central area **18.**

The coupling lever **17** also has a resting shaping **33** defined at the coupling portion **20** and configured to accommodate the locking insert **32** when the support assembly **12** is in the lowered working arrangement and the coupling lever **17** is in the coupling arrangement.

In particular, the locking insert **32** consists of an elastically deformable rigid rod attached to the swivelling bracket **25.**

Said elastically deformable rigid rod is configured so that when the support assembly **12** is rotated downwards by a user, it rotates towards the resting shaping **33** and is arranged therein, while simultaneously the coupling lever **17** rotates so that the coupling portion **20** enters the coupling seat **21** locking the movable bracket **25** and with it the entire support assembly **12.**

The resting shaping **33** is configured such that when the coupling portion **20** of the coupling lever **17** is rotated away from the coupling seat **21,** the locking insert **32** slides out of the same resting shaping **33.**

The coupling portion **20** is configured such that when the coupling portion **20** of the coupling lever **17** is rotated away from the coupling seat **21**:
- in a first step of such a release rotation the locking insert **32** slides out of the same resting shaping **33,**
- and in a second subsequent step of the release rotation the locking insert **32** snaps into the locking recess **31.**

When the locking insert **32** is inside the locking recess **31,** the coupling lever **17** has assumed the locked disengagement arrangement, and a user of the cargo bike on which the kickstand **10** is installed can make the support assembly **12** rotate upwards i.e. towards the resting arrangement.

The recovery means **24,** configured to release the coupling lever **17** from the locked disengagement arrangement and to allow the coupling lever **17** to assume the free disengagement arrangement wherein said coupling portion **20** is outside said coupling seat **21,** comprise:
- a fastening element **32a** configured to fasten the locking insert **32** to the swivelling bracket **25,** so as to drag the locking insert **32** into rotation when the swivelling bracket **25** rotates;
- a fastening hole **34** defined on the swivelling bracket **25** configured for fastening the fastening element **32a** to the same swivelling bracket **25.**

In particular, in the embodiment of the invention described herein by way of non-limiting example of the invention itself, the locking insert **32** and the fastening element **32a** are part of a single helical body **35,** shown in Figures 2, 6 and 9.

This helical body **35** is arranged coaxial to the hinging means **14.**

Specifically, the helical body **35** consists of a wound metal wire, comprising:
- a central annular portion **36,** configured for constraint to a coaxial pin between a screw head **27a** and an underlying side wall **11a** of the fixed bracket **11;**
- a first end shaped to define the elastically deformable rigid rod which in turn defines the locking insert **32;**
- a second hook-shaped end, configured to define the fastening element **32a** and to be coupled into the fastening hole **34.**

The fixed bracket **11** has a passage seat **40** defined at the coupling seat **21** when the support assembly **12** is in the lowered working arrangement.

The passage seat **40** is obviously positioned at the coupling portion **20** of the coupling lever **17.**

The passage seat **40** is defined on the first wall **11a** of the fixed bracket **11.** The passage seat **40** is positioned and shaped in such a way as to allow the passage of the coupling portion **20** of the coupling lever **17** towards the coupling seat **21.**

It is also an object of the invention a cargo bike **50** comprising a kickstand **10** as described above.

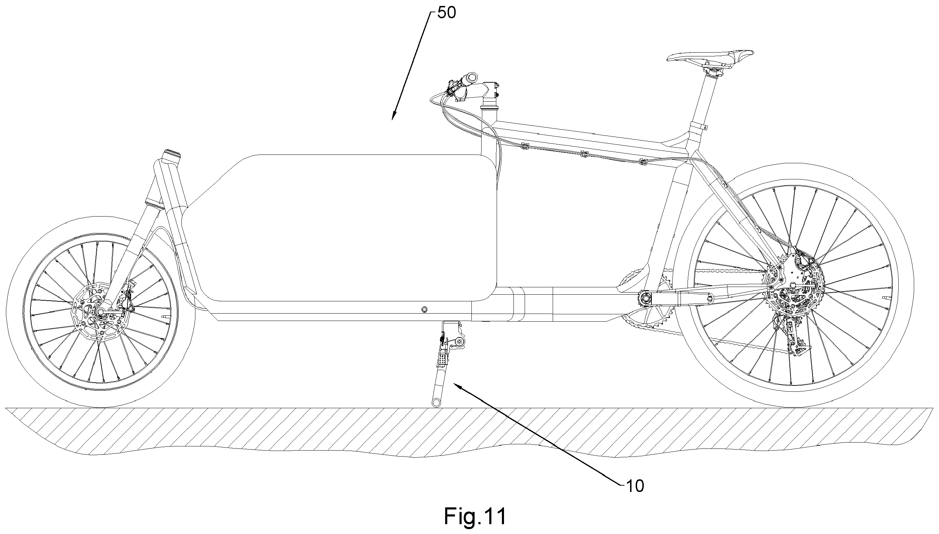

Such a cargo bike is depicted schematically in Figure 11.

Practically, it has been established that the invention achieves the intended task and objects.

In particular, the invention provides a kickstand whose control system is less cumbersome and inconvenient compared to the release means of similar known kickstands; such a kickstand is in fact devoid of Bowden cables, and is easily released from the lowered working arrangement with a quick and simple action of a user's foot on the manoeuvring portion of the coupling lever.

In addition, the invention has developed a kickstand that is faster to install on a bicycle than known Bowden cable release means, partly due to the fact that such a kickstand does not require Bowden cables to be installed.

Further, the invention has developed a kickstand especially for cargo bikes that is easy and intuitive to manoeuvre.

The invention thus conceived is susceptible of numerous modifications and variations, all of which are within the scope of the inventive concept; moreover, all the details may be replaced by other technically equivalent elements.

In practice, the components and the materials used, as long as they are compatible with the specific use, as well as the dimensions and the contingent shapes, can be any according to requirements and the prior art.

If the characteristics and techniques mentioned in any claim are followed by reference signs, these reference signs are to be intended for the sole purpose of increasing the intelligibility of the claims and, consequently, such reference signs have no limiting effect on the interpretation of each element identified by way of example by these reference signs.

## Claims

1. Kickstand (10) particularly for cargo bikes and the like, comprising:
- a fixed bracket (11) configured to be attached to a bicycle frame;
- a support assembly (12) comprising at least one ground support portion (13), said support portion (12) being pivoted with hinging means (14) to said fixed bracket (11), and being configured to assume a raised resting arrangement, adjacent to said bicycle frame, and a lowered working arrangement, with said at least one ground support portion (13) positioned in contact with the ground;
- reversible locking means (15) configured to stabilise the position of said support assembly (12) with respect to said fixed bracket (11) in said lowered working arrangement;
- automatic lifting means (16) configured to allow the automatic rotation of said support assembly (12) from said lowered working arrangement to said raised resting arrangement,
**characterised in that** said reversible locking means (15) comprise:
- a coupling lever (17), said coupling lever (17) comprising in turn a central area (18), a manoeuvring portion (19) and an opposite coupling portion (20), said central area (18) being pivoted to said fixed bracket (11);
- a coupling seat (21) defined on said support assembly (12), said coupling seat (21) being positioned and configured to be at least partly occupied by said coupling portion (20) of said coupling lever (17) when said support assembly (12) is in said lowered working arrangement and said coupling lever assumes a coupling arrangement;
- elastic coupling means (22) configured to act on said coupling lever (17) so that said coupling portion (20) is at least partly engaged in said coupling seat (21) in said coupling arrangement when said support assembly (12) is in said lowered working arrangement;
- reversible disengagement means (23) configured to lock said coupling lever (17) in a locked disengagement arrangement of said coupling portion (20) from said coupling seat (21) when said support assembly (12) is in said lowered working arrangement;
- recovery means (24) configured to release said coupling lever (17) from said locked disengagement arrangement and to allow said coupling lever (17) to assume either said coupling arrangement or a free disengagement arrangement in which said coupling portion (20) is outside said coupling seat (21).

2. Kickstand according to claim 1, **characterised in that** said coupling lever (17) is configured to assume alternatively:
- a coupling arrangement, in which said coupling portion (20) of said coupling lever (17) is at least partly engaged in said coupling seat (21);
- a locked disengagement arrangement, wherein said coupling lever (17) is in such a position that said coupling portion (20) is completely outside said coupling seat (21), and the coupling lever (17) itself is locked in said arrangement by said reversible disengagement means (23);
- a free disengagement arrangement, wherein said coupling lever (17) is in a position such that said coupling portion (20) is completely outside said coupling seat (21), and said coupling lever (17) is free from the action of said reversible disengagement means (23), said reversible disengagement means (23) not acting on said coupling lever (17) as a result of the action of said recovery means (24), and said coupling lever (17) being free to rotate as a result of the action of said elastic coupling means (22);
said coupling lever (17) being pivotally constrained to a side pivoting portion (11f) of said fixed bracket (11), and in particular, said coupling lever (17) being pivotally constrained to said side pivoting portion (11f) at its central area (18).

3. Kickstand according to claim 1 or 2, **characterised in that** said fixed bracket (11) comprises a first central part (11b) for attachment to a bicycle frame, and two opposed first side walls (11a, 11c), said central part (11b) and said opposed side walls (11a, 11c) defining a central compartment in which the support assembly (12) is hinged.

4. Kickstand according to claim 3, **characterised in that** said support assembly (12) comprises:
- a swivelling bracket (25), pivoted with said hinging means (14) to the fixed bracket (11);
- said ground support portion (13) attached to said swivelling bracket (25), said swivelling bracket (25) comprising a second central part (25b) and two opposing second side walls (25a, 25c), wherein said second side walls (25a, 25c) are pivoted with said hinging means (14) to the facing first side walls (11a, 11c) of said fixed bracket (11).

5. Kickstand according to one or more of the preceding claims, **characterised in that** said hinging means (14) comprise two opposing coaxial pins, each coaxial pin comprising a screw portion (27a) and a clamping nut (27b).

6. Kickstand according to one or more of the preceding claims, **characterised in that** said coupling seat (21) is defined on a second side wall (25a) of said swivelling bracket (25), said coupling seat (21) being positioned and configured to be at least partly occupied by the coupling portion (20) of said coupling lever (17) when said support assembly (12) is in said lowered working arrangement and said coupling lever (17) assumes a coupling arrangement.

7. Kickstand according to one or more of the preceding claims, **characterised in that** said elastic coupling means (22) comprise a tension spring (30) coupled with a first end to a side coupling portion (11e) of said fixed bracket (11), and with the second end to a coupling tab (17a) extending from the central area (18) of said coupling lever (17).

8. Kickstand according to one or more of the preceding claims, **characterised in that** said reversible disengagement means (23) comprise:
- a locking recess (31) defined on the coupling portion (20) of said coupling lever (17) near said end portion (20a);
- a locking insert (32), configured to engage in the locking recess (31) when the support assembly (12) is in the lowered working arrangement and simultaneously said coupling lever (17) is rotated according to a rotation and release direction which causes said coupling portion (20) to exit from said coupling seat (21),
said coupling lever (17) having a resting shaping (33) defined at said coupling portion (20) and configured to accommodate the locking insert (31) when the support assembly (12) is in a lowered working arrangement and said coupling lever (17) is in the coupling arrangement, said resting shaping (33) being configured such that when the coupling portion (20) of said coupling lever (17) is rotated away from the coupling seat (21), said locking insert (32) slides out of the resting shaping (33) itself.

9. Kickstand according to claim 8, **characterised in that** said locking insert (32) consists of an elastically deformable rigid rod fixed to the swivelling bracket (25), said elastically deformable rigid rod being configured such that when said support assembly (12) is rotated downwards by a user it rotates towards said resting shaping (33) and is arranged therein, while at the same time said coupling lever (17) rotates so that the coupling portion (20) enters the coupling seat (21) locking said movable bracket (25) and with it the whole support assembly (12).

10. Kickstand according to one or more of claims 8 or 9, **characterised in that** said coupling portion (20) is configured such that when said coupling portion (20) of the coupling lever (17) is rotated away from the coupling seat (21):
- in a first step of such a release rotation, said locking insert (32) slides out of said resting shaping (33),
- and in a second subsequent step of the release rotation, said locking insert (32) snaps into said locking recess (31).

11. Kickstand according to one or more of claims 8 to 10, **characterised in that** said recovery means (24) comprise:
- a fastening element (32a) configured to fasten the locking insert (32) to said swivelling bracket (25), so as to drag said locking insert (32) into rotation when the swivelling bracket (25) rotates;
- a fastening hole (34), defined on the swivelling bracket (25), configured for fastening the fastening element (32a) to the same swivelling bracket (25).

12. Kickstand according to claims 8, 9 and 11, **characterised in that** said locking insert (32) and said fastening element (32a) are part of a single helical body (35), said helical body (35) being arranged coaxial to the hinging means (14) and said helical body (35) consisting of a wound metal wire, comprising:
- a central annular portion (36), configured for constraint to a coaxial pin between a screw head (27a) and an underlying side wall (11a) of the fixed bracket (11);
- a first end shaped to define said elastically deformable rigid rod, which in turn defines the locking insert (32);
- a second hook-shaped end, configured to define the fastening element (32a) and to be coupled into said fastening hole (34).
